# EUROPEAN PATENT SPECIFICATION

(11) **EP 2 957 607 B1**
(45) Date of publication and mention of the grant of the patent: **21.06.2017**
(21) Application number: 15169774.5
(22) Date of filing: 29.05.2015
(51) Int. Cl.: C09D 11/328, C09D 11/38, B41J 2/14

(54) **IMAGE FORMING METHOD**
BILDERZEUGUNGSVERFAHREN
PROCÉDÉ DE FORMATION D'IMAGES

(30) Priority: 17.06.2014 JP 2014124490
(43) Date of publication of application: 23.12.2015
(73) Proprietor: Konica Minolta, Inc., Tokyo 100-7015 (JP)
(72) Inventor: Iwata, Takashi, Tokyo, 100-7015 (JP); Kawashima, Kouki, Tokyo, 100-7015 (JP)
(74) Representative: Gille Hrabal

(56) References cited:
- EP-A2- 0 572 231
- EP-A2- 1 055 712
- EP-A2- 2 527 412
- US-A1- 2004 095 439
- US-A1- 2010 265 294

## Description

### Background of the Invention

### Field of the Invention

The present invention relates to an image forming method using an inkjet textile printing ink.

### Description of the Related Art

Conventional textile printing methods widely used include screen textile printing and the like using printing plates. In recent years, what is called inkjet textile printing has become widely used, which takes advantage of an inkjet method and includes forming an image on a recording medium such as a fabric by an inkjet method. In inkjet textile printing, extremely small droplets of ink are discharged from an inkjet recording head and landed on a recording medium such as a fabric to form an image.

Generally known colorant types used for inkjet textile printing inks include acid dyes, disperse dyes, reactive dyes, and other dyes, and pigments. Known methods for forming images on fabrics composed mainly of cellulose or the like include inkjet textile printing methods using specifically vinyl sulfone reactive dyes or monochlorotriazine reactive dyes (JP 2002-88665 A and JP 2002-179945 A).

Such textile printing inks have a problem in that as the content of a water-soluble organic solvent in them increases, the solubility of the dye decreases, so that the dye can easily precipitate even when a small amount of water evaporates. In addition, textile printing dyes have a cyclic structure or an azo structure and thus can strongly interact with metal, particularly with stainless steel. Therefore, if such textile printing inks are used in an inkjet device having a metal nozzle plate in its inkjet recording head, the resulting dye precipitate can easily adhere to the metal surface, which can cause a discharge defect such as ejection deflection. Particularly when the discharge hole is so tapered that the discharge hole diameter on the outlet side is smaller than that on the inlet side, a problem occurs in that the dye precipitate can easily accumulate in the nozzle because the inside of the nozzle is more difficult to clean by flushing the ink than the inside of cylindrical nozzles. EP-A-572231 shows the preamble of claim 1.

### Summary of the Invention

The present invention has been made in view of these circumstances, and an object thereof is to provide an image forming method that makes it possible to prevent a reduction in ejection performance, which occurs when an inkjet textile printing ink is used in an inkjet recording head having a flow channel member made of metal, particularly having a metal flow channel member with tapered discharge holes. It is another object of the present invention to provide an image forming method in which an inkjet textile printing ink has good storage stability.

The inventors have found that among acids that can be added as buffers to textile printing inks, some specific acids can also function as adsorption inhibitors to inhibit the adsorption of a dye from a textile printing ink to the metal component of an inkjet recording head. The inventors have also found that when such adsorption inhibitors have a pKa of 5.5 or more, the decomposition of the dye can be suppressed, and the resulting ink can have good storage stability. The present invention has been made based on these findings.

Specifically, the objects of the present invention are achieved according to the features shown below.
[1] To achieve at least one of the abovementioned objects, according to an aspect, an image forming method reflecting one aspect of the present invention comprises discharging an inkjet textile printing ink from a plurality of ink discharge holes (317) provided in an inkjet recording head (200), and the image forming method is characterized in that the inkjet recording head (200) comprises tapered ink discharge holes (317), ink pressurizing chambers (314), and a metal flow channel member (310) configured to connect the ink discharge holes (317) to the ink pressurizing chambers (314), the inkjet textile printing ink comprises a dye, an adsorption inhibitor, a water-soluble organic solvent, and water, the inkjet textile printing ink contains 25% by weight to less than 70% by weight of the water-soluble organic solvent based on the total weight of the ink, and the adsorption inhibitor is an acid with a pKa of 5.5 to 7.5.
[2] According to the image forming method of Item. 1, the flow channel member (310) preferably comprises stainless steel.
[3] According to the image forming method of Item. 1 or 2, the adsorption inhibitor is preferably an aliphatic polycarboxylic acid.
[4] According to the image forming method of Item. 3, the aliphatic polycarboxylic acid is preferably a hydroxy acid.
[5] According to the image forming method of Item. 4, the hydroxy acid is preferably citric acid.
[6] According to the image forming method of any one of Items. 1 to 5, a set of a yellow inkjet textile printing ink, a magenta inkjet textile printing ink, and a blue inkjet textile printing ink is preferably used, and the yellow, magenta, and blue inks each preferably contain 30% by weight to less than 70% by weight of the water-soluble organic solvent.
[7] According to the image forming method of any one of Items. 1 to 6, the dye is preferably a reactive dye.
[8] According to the image forming method of any one of Items. 1 to 6, the dye is preferably a disperse dye.

### Brief Description of the Drawings

The above and other objects, advantages and features of the present invention will become more fully understood from the detailed description given hereinbelow and the appended drawings which are given by way of illustration only, and thus are not intended as a definition of the limits of the present invention, and wherein:
Fig. 1 is a partial schematic diagram showing an example of the structure of an inkjet recording device;
Fig. 2 is a perspective view showing an example of an inkjet recording head;
Fig. 3 is a longitudinal sectional view along line X-X of Fig. 2 showing an inkjet recording head;
Fig. 4 is an enlarged sectional view showing part of a flow channel member to which a piezoelectric actuator is attached;
Fig. 5 is a longitudinal sectional view of a reservoir flow channel member; and
Fig. 6 is an enlarged view of an ink discharge hole (nozzle) part shown in Fig. 3.

### Description of the Preferred Embodiments

Hereinafter, an embodiment of the present invention will be described with reference to the drawings. However, the scope of the invention is not limited to the illustrated examples.

### 1. Image forming method

The present invention is directed to an image forming method using an inkjet textile printing ink containing a dye and other components. The image forming method of the present invention includes the step of discharging the inkjet textile printing ink from an inkjet recording head to a recording medium (the ink discharging step).

### <Ink discharging step>

The ink discharging step includes discharging droplets of an inkjet textile printing ink from an inkjet recording head to a recording medium. The ink discharging step is performed using an inkjet recording device. The droplets of the inkjet ink are ejected from the nozzle surface of the inkjet recording head in the inkjet recording device and landed on a certain area of the recording medium (a possible landing area). More specifically, scanning by the inkjet recording head is performed an appropriate number of times so that the inkjet textile printing ink is ejected onto one possible landing area, and then the recording medium is fed appropriately. Droplets of the inkjet textile printing ink are again ejected from the inkjet recording head and landed on another possible landing area adjacent to the former possible landing area. This process is repeated to form an image of a collection of droplets of the inkjet textile printing ink on the recording medium.

The image forming method of the present invention preferably includes (1) a pretreatment step, (2) a coloring step, (3) a cleaning step, and (4) a drying step. Hereinafter, each step will be described.

### <Pretreatment step>

The pretreatment step is the step of applying a pretreatment agent to the recording medium to be used. Examples of the method for applying the pretreatment agent to the recording medium include a pad method, a coating method, a spray method, an inkjet method, or the like. Any of these application methods may be used to apply the pretreatment agent to the recording medium.

The pretreatment agent may be appropriately selected depending on the inkjet textile printing ink or recording medium used. When the inkjet textile printing ink contains a reactive dye, the pretreatment agent is preferably, but not limited to, a printing paste, more preferably an alkaline printing paste. This is because a suitably alkaline material needs to be present in order to reliably fix the reactive dye-containing inkjet textile printing ink on the recording medium.

Examples of the printing paste include natural gums such as guar gum and locust bean gum, starches, sodium alginate, marine algae such as seaweed glue, plant peels such as pectic acid, cellulose derivatives such as methyl cellulose, ethyl cellulose, hydroxyethyl cellulose, and carboxymethyl cellulose, modified starches such as roasted starch, alpha starch, carboxymethyl starch, carboxyethyl starch, and hydroxyethyl starch, modified natural gums such as modified shiratsu gum and modified locust bean gum, algin derivatives, synthetic glues such as polyvinyl alcohol and polyacrylic ester, emulsions, and the like.

The amount of application of the pretreatment agent (squeezing ratio) or the content of the printing paste in the pretreatment agent may be appropriately adjusted depending on the type of the recording medium or the intended use.

The recording medium is preferably a fabric. Examples of the fabric include woven fabrics of fibers dyeable with a reactive dye, such as cotton, hemp, viscose, wool, silk, and nylon; nonwoven fabrics; blended woven fabrics of these fibers and synthetic fibers such as polyester fibers, acetate fibers, polypropylene fibers, or vinylon fibers; blended nonwoven fabrics; and the like. In the image forming method of the present invention, these woven or nonwoven fabrics may be conventionally known fabrics or pretreated fabrics.

The pretreatment agent may further contain a hydrotropic agent. Examples of the hydrotropic agent include urea and an alkyl urea such as dimethyl urea, thiourea, monomethyl thiourea, or dimethyl thiourea. The addition of the hydrotropic agent improves the image density. If a combination of urea, an alkyl urea, and thiourea is added to the pretreatment agent, the content of the hydrotropic agent can be reduced. Thiourea is preferably added in order to perform uniform dyeing.

The content of the hydrotropic agent in the pretreatment agent is preferably, but not limited to, 15% by weight or less, more preferably 10% by weight or less, based on the total weight of the pretreatment agent. The addition of the hydrotropic agent makes it possible to improve the stability of the pretreatment agent and to prevent the pretreatment agent-coated recording medium from undergoing cracking or the like. When the hydrotropic agent is added to the inkjet textile printing ink, the addition of the hydrotropic agent to the pretreatment agent may be reduced or eliminated. The pretreatment agent may further contain a pH adjusting agent. Preferred examples of the pH adjusting agent include acid ammonium salts, ammonium sulfate, ammonium tartrate, dibasic sodium phosphate, sodium carbonate, or the like. The addition of the pH adjusting agent can stabilize the color and improve the dyeing properties. The content of the pH adjusting agent in the pretreatment agent is preferably, but not limited to, about 0.2 to about 5.0% by weight, more preferably about 0.5 to about 3.0% by weight.

### <Coloring step>

The coloring step is the step in which the dye in an image, which is not sufficiently adsorbed or fixed on the recording medium before the coloring reaction, is adsorbed and fixed to the recording medium so that the original color of the ink is developed. The coloring method may be a conventionally known method, such as a steaming method, an HT steaming method, a thermofixing method, an alkali pad steam method, an alkali blotch steam method, an alkali shock method, or an alkali cold fixing method. Any of these methods may be appropriately selected depending on the inkjet textile printing ink or the recording medium. The image formed on the recording medium before the coloring reaction may be colored immediately or after a lapse of time.

### <Cleaning step>

The cleaning step is the step in which the dye that is not fixed on the recording medium after the coloring step is removed by cleaning. The cleaning method may be appropriately selected depending on the inkjet textile printing ink or the recording medium. For example, cellulose fibers are generally subjected to water washing and hot water washing, then a treatment in a soaping bath containing a nonionic detergent, and then hot water washing and water washing.

### <Drying step>

The drying step is the step of drying the cleaned recording medium. The drying method includes, but is not limited to, squeezing the cleaned recording medium, handing the cleaned recording medium to dry, or drying the cleaned recording medium with a drier (such as a heat roll or an iron).

### 2. Inkjet recording device

The image forming method of the present invention can be performed using an inkjet recording device having an inkjet recording head. Hereinafter, an inkjet recording device and an inkjet recording head for use in the image forming method of the present invention will be described with reference to the drawings. It will be understood that any other inkjet recording device or head may be used in the present invention.

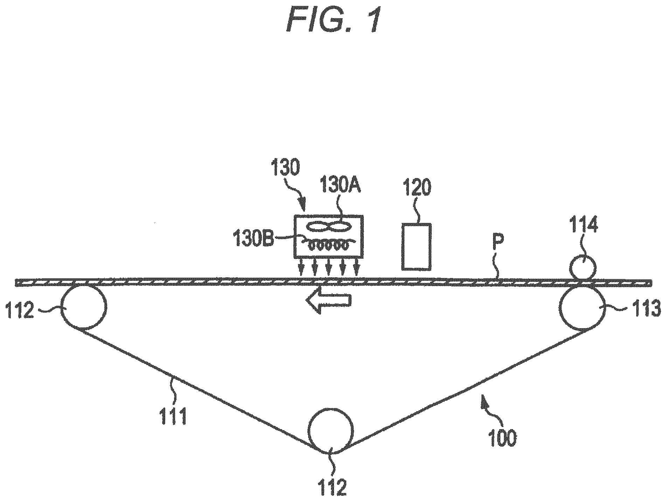

Fig. 1 is a partial schematic diagram showing an example of the structure of an inkjet recording device for use in the present invention. The inkjet recording device includes a feeder 100 configured to feed a recording medium, a head carriage 120 on which a plurality of inkjet recording heads (not shown) each configured to discharge an inkjet textile printing ink to the recording medium are mounted, and a warm air blower 130 configured to blow warm air to the recording medium.

The feeder 100 includes a sticky belt 111, a support roller 112, a feed roller 113, and a nip roller 114. The sticky belt 111 is supported by the support roller 112 and the feed roller 113 and configured to go around between the support roller 112 and the feed roller 113. The nip roller 114 is disposed opposite to the feed roller 113 with the sticky belt 111 interposed between them.

The warm air blower 130 and the head carriage 120 are disposed above the recording medium P. The warm air blower 130 has a fan 130A and a heat generator 130B inside, which allow temperature control. The inkjet recording device usable in the present invention may also include a textile printing ink control unit (not shown) configured to control the discharge of the inkjet textile printing ink of each color according to the set image-forming conditions.

As the feed roller 113 drives, the recording medium P disposed on the upper surface of the sticky belt 111 is fed to the lower surface of the nip roller 114. The recording medium P is fixed to the sticky belt 111 by being pressed by the sticky belt 111 and the nip roller 114. The recording medium P fixed on the sticky belt 111 is fed below the head carriage 120. The inkjet recording heads mounted on the head carriage 120 form an image by discharging ink droplets and landing the droplets on a certain area of the recording medium (a possible landing area). The warm air blower 130 then blows air or warm air, whose temperature is controllable, to dry the image formed on the recording medium P.

### <Inkjet recording head>

The inkjet recording head for use in the present invention may be of any type such as a thermal type or a piezo type. Hereinafter, a piezo type inkjet recording head will be described as an example.

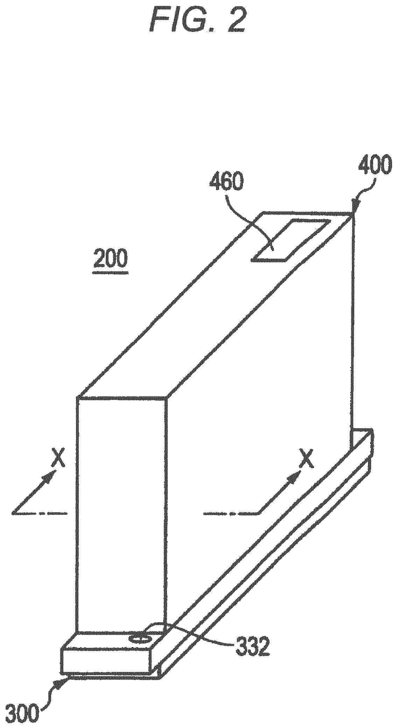

Fig. 2 is a perspective view showing an example of an inkjet recording head for use in the present invention. Fig. 2 shows an inkjet recording head 200 including a head main body 300 and a case 400. The case 400 is made of metal and has an opening 460 through which a signal cable for transferring a driving signal is allowed to pass. In Fig. 2, the opening 460 is formed at part of the upper face of the case 400. A signal cable (not shown) connected to a control unit (not shown) and provided to transfer a driving signal is allowed to pass through the opening 460, which is covered with a resin lid or the like. The inkjet recording head 200 has an ink introduction hole 332. The inkjet textile printing ink is supplied through the ink introduction hole 332.

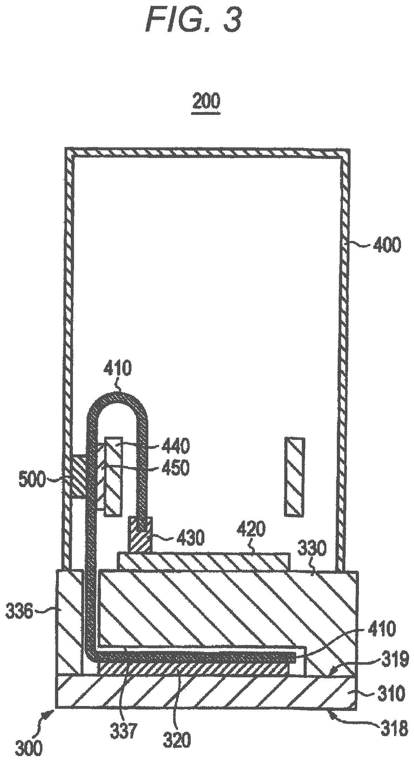

Fig. 3 is a longitudinal sectional view along line X-X of Fig. 2 showing the inkjet recording head 200. The head main body 300 includes a flow channel member 310, a reservoir flow channel member 330, a piezoelectric actuator unit 320, a signal transfer part 410, and a driver IC 500. The reservoir flow channel member 330 is provided on the head main body 300. A frame 440 and a substrate 420 are fixed on the reservoir flow channel member 330. A heat-insulating elastic member 450 is attached to the frame 440, and a connector 430 is mounted on the substrate 420. A driving signal is sent from the control unit (not shown) through the signal cable (not shown) to the substrate 420 and then sent to the signal transfer part 410 through the connector 430. The driver IC 500 implemented in the signal transfer part 410 processes the driving signal. A displacement element 323 of the piezoelectric actuator unit 320 described below is driven in response to the processed driving signal through the signal transfer part 410, so that it pressurizes the ink in the flow channel member 310 and thus discharges ink droplets. The signal transfer part 410 is a flexible strip having metal wiring inside. Part of the wiring is exposed at the surface of the signal transfer part 410. A connector 430, the driver IC 500, and the piezoelectric actuator unit 320 are electrically connected through the exposed part of the wiring.

### [Flow channel member]

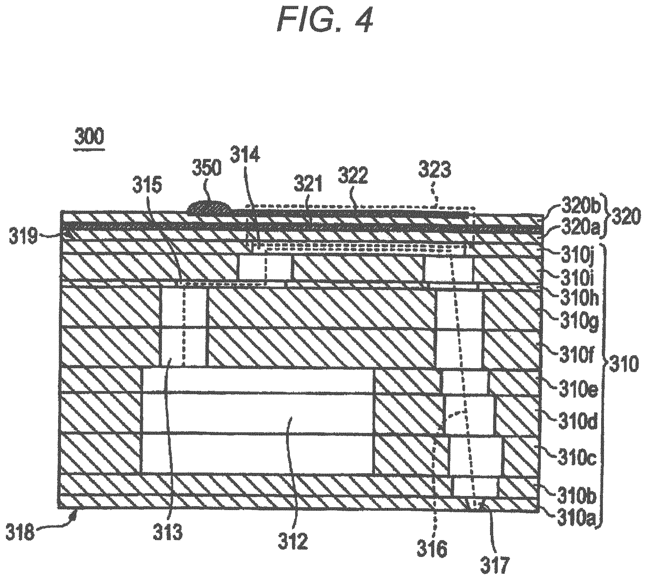

Fig. 4 is a partially enlarged sectional view of the flow channel member to which the piezoelectric actuator is attached. The flow channel member 310 as a component of the head main body 300 includes plates 310a to 310j that are stacked in this order and integrated and each have a large number of holes.

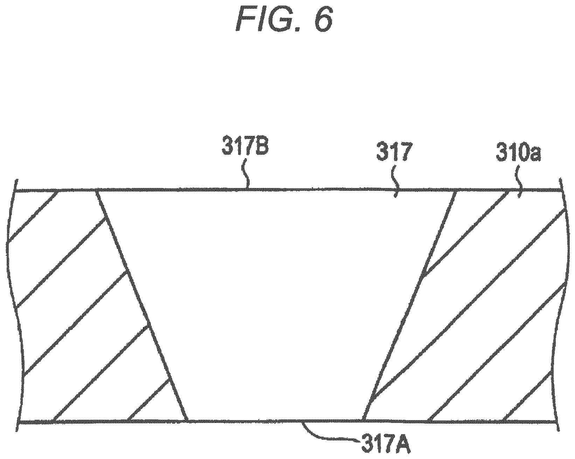

The plate 310a has a plurality of holes that form ink discharge holes 317 (nozzles). As shown in Fig. 6, each ink discharge hole 317 is so tapered (conical) that its opening 317A on the ink discharge port side is smaller than its opening 317B on the ink pressurizing chamber side. The surface of the plate 310a having the openings of the ink discharge holes form an ink discharge hole surface 318 of the flow channel member 310.

The plate 310b has a plurality of holes that form nozzle flow channels 316. The plates 310c to 310e each have a plurality of holes that form a common flow channel (manifold) 312, and have a plurality of holes that form nozzle flow channels 316.

The plates 310f and 310g each have a plurality of holes that form individual supply flow channels 313, and have a plurality of holes that form nozzle flow channels 316. The individual supply flow channels 313 connect the common flow channel 312 to apertures 315 formed in the plate 310h as described below.

The plate 310h has a plurality of holes that form apertures 315, and has a plurality of holes that form nozzle flow channels 316. The plate 310i has a plurality of holes that connect the apertures 315 to ink pressurizing chambers 314, and has a plurality of nozzle flow channels 316.

The plate 310j has a plurality of holes that form ink pressurizing chambers 314. The surface of the plate 310j having the openings of the ink pressurizing chambers 314 forms an ink pressurizing chamber surface 319 of the flow channel member 310. The openings of the ink pressurizing chambers 314 are closed when the piezoelectric actuator unit 320 described below comes in contact with the upper surface of the flow channel member 310.

The plates 310a to 310j are aligned and stacked in such a way that, as shown in Fig. 4, the holes communicate with one another to form the nozzle flow channels 316 and the common flow channel 312.

The plates 310a to 310j provided to form the flow channel member 310 are each a plate-shaped member with a specific thickness, in which the holes are formed by photolithographic etching or the like. Each plate is made of at least one metal and preferably made of at least one stainless steel selected from austenitic, ferritic, and martensitic stainless steels.

Examples of austenitic stainless steel include SUS 301, SUS 303, SUS 304, SUS 316, SUS 317, SUS 321, SUS 347, and the like. Examples of ferritic stainless steel include SUS 405, SUS 429, SUS 434, SUS 444, and the like. Examples of martensitic stainless steel include SUS 403, SUS 410, SUS 440A, and the like.

The holes of each of the plates communicate with one another to form nozzle flow channels 316 extending from the port for receiving the ink from the common flow channel 312 (the outlet of the common flow channel 312) to the ink discharge hole 317. The ink is supplied from the reservoir flow channel member described below to the common flow channel 312 and then discharged from the ink discharge holes 317 specifically through the route shown below.

First, the ink flows upward from the common flow channel 312, passes through the individual supply flow channels 313, and reaches one end of the apertures 315. Subsequently, the ink horizontally proceeds along the extending direction of the apertures 315 and reaches the other end of the apertures 315. The ink flows upward from the other end of the apertures 315 and reaches one end of the ink pressurizing chambers 314. The ink further horizontally proceeds along the extending direction of the ink pressurizing chambers 314 and reaches the other end of the ink pressurizing chambers 314. The ink gradually travels from the other end of the ink pressurizing chambers 314 in the horizontal direction, then flows downward, and is discharged from the ink discharge holes (nozzles), which form openings in the lower surface of the flow channel member 310 (ink discharge hole surface).

### [Piezoelectric actuator]

As shown in Fig. 4, the piezoelectric actuator unit 320 is provided on the flow channel member 310. The piezoelectric actuator unit 320 has a multilayer structure including two piezoelectric ceramic layers 320a and 320b. The piezoelectric ceramic layers 320a and 320b each have a thickness of about 20 µm, and the piezoelectric actuator unit 320 has a total thickness of about 40 µm. The piezoelectric ceramic layers 320a and 320b each extend over ink pressurizing chambers 314. The piezoelectric ceramic layers 320a and 320b are made of a ferroelectric ceramic material based on lead zirconate titanate (PZT).

The piezoelectric actuator unit 320 has a common electrode 321 made of a metal material such as a Ag-Pd based material and individual electrodes 322 made of a metal material such as an Au-based material. The individual electrodes 322 are disposed on the upper surface of the piezoelectric actuator unit 320, which is opposite to the ink pressurizing chambers 314. One end of the individual electrode 322 is drawn out of the region opposite to the ink pressurizing chamber 314 and provided with a connection electrode 350. A driving signal is supplied from the control unit to the individual electrode 322 through the signal transfer part 410. When a predetermined driving signal is selectively supplied to the individual electrode 322, a pressure is applied to the ink in the ink pressurizing chamber 314 corresponding to the individual electrode 322. This allows droplets of the ink to be discharged from the ink discharge hole 317 through the nozzle flow channel 316.

The common electrode 321 is formed over almost the entire surface region between the piezoelectric ceramic layers 320a and 320b. Specifically, the common electrode 321 extends to cover all the ink pressurizing chambers 314 in the region opposite to the piezoelectric actuator unit 320. The common electrode 321 has a thickness of about 2 µm. The common electrode 321 is grounded in a certain region (not shown) and kept at a ground potential.

In the laminate including the two piezoelectric ceramic layers 320a and 320b, displacement elements (ink discharge elements) 323 are each formed for each ink pressurizing chamber 314. Each displacement element 323 is a piezoelectric actuator having a unit structure as shown in Fig. 4. Each displacement element 323 includes the piezoelectric ceramic layer 320a located immediately above the ink pressurizing chamber 314, the common electrode 321, the piezoelectric ceramic layer 320b, and the individual electrode 322. The piezoelectric actuator unit 320 includes a plurality of the displacement elements 323 as pressurizing parts.

### [Reservoir flow channel member]

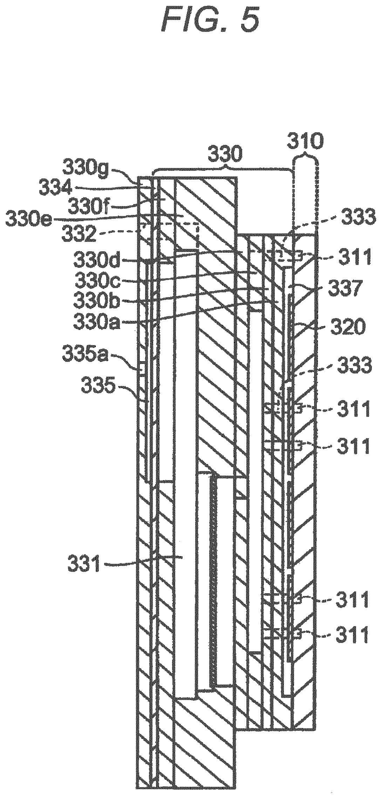

Fig. 5 is a longitudinal sectional view of the reservoir flow channel member 330. The reservoir flow channel member 330 includes an ink introduction hole 332 communicating with an external ink tank (not shown); an intermediate ink receiving port 333 communicating with the ink introduction port 311 of the flow channel member 310; an internal reservoir flow channel 331 configured to direct the ink from the ink introduction hole 332 to the intermediate ink receiving port 333; and an air chamber 335.

The reservoir flow channel member 330 includes a plurality of rectangular plates 330a to 330g and a film provided to form a deformable damper 334, which are placed on one another. One surface of the damper 334 faces the reservoir flow channel 331, and the other surface faces the air chamber 335. The air chamber communicates with the outside through an opening 335a. Therefore, when the damper 334 is deformed, the volume of the reservoir flow channel 331 is changed. This allows stable supply of the ink in a case such as when the amount of discharge of the ink sharply increases. Similarly to the flow channel member 310, the reservoir flow channel member 330 is formed by a process that includes obtaining plates 330a to 330g by a rolling method or the like, forming the plates 330a to 330g into predetermined patterns by etching, and stacking and bonding the plates 330a to 330g together with a damper 334. This process forms the reservoir flow channel 331, the air chamber 335, the opening 335a, and a recess 337 in which piezoelectric actuators are placed.

The inkjet recording head for use in the present invention preferably has an ink discharge hole (nozzle) diameter of 10 to 100 µm, more preferably 10 to 50 µm. If the nozzle diameter is less than 10 µm, impurities will be more likely to clog the nozzle. On the other hand, if the nozzle diameter is more than 100 µm, the sharpness of the formed image will decrease. The size of the discharged ink droplets is preferably from 4 to 150 pl, more preferably from 5 to 80 pl. If the ink droplet size is less than 4 pl, the discharged ink droplets will be vulnerable to the air flow in the vicinity of the head. If the ink droplet size is more than 150 pl, the formed image will have a significantly granular appearance.

Hereinafter, an example of a method for manufacturing the inkjet recording head 200 described above will be described.

First, plates 310a to 310j are formed by a rolling method and other processes and then laminated with an adhesive to form a flow channel member 310. Holes are formed in predetermined patterns in the plates 310a to 310j by etching and other processes to form a common flow channel 312, individual supply flow channels 313, ink pressurizing chambers 314, nozzle flow channels 316, and other parts.

Similarly, plates 330a to 330g having various holes and a resin film for serving as a damper 334 are laminated to form a reservoir flow channel member 330.

Next, a piezoelectric actuator unit 320 is formed. First, a mixture of a piezoelectric ceramic powder and an organic composition is formed into tapes by a common tape-forming method such as a roll coater method or a slit coater method. After backing, a plurality of green sheets for forming piezoelectric ceramic layers 320a and 320b are obtained. An electrode paste for forming a common electrode 321 is deposited on the surface of some of the green sheets by a printing method or the like. If necessary, via holes are formed in some of the green sheets and then filled with a via conductor. The green sheets are stacked to form a laminate, which is subjected to pressure bonding. After the pressure bonding, the laminate is baked in a high oxygen concentration atmosphere. Subsequently, individual electrodes 322 are printed on the surface of the baked product using an organic gold paste, and then baked. Subsequently, a connection electrode 350 is printed using a Ag paste and then baked, so that a piezoelectric actuator unit 320 is formed.

Next, the resulting piezoelectric actuator unit 320 is bonded to the flow channel member 310. The bonding is performed using, for example, an adhesive. A well-known adhesive may be used. For example, the adhesive is preferably based on at least one thermosetting resin selected from the group consisting of epoxy resin, phenolic resin, and polyphenylene ether resin. The piezoelectric actuator unit 320 can be bonded to the flow channel member 310 with such an adhesive heated to its thermosetting temperature.

The piezoelectric actuator unit 320 is electrically connected to a control unit (control circuit). First, a silver paste is applied to the connection electrode 350, and then an FPC as a signal transfer part 410, on which a driver IC 500 is mounted in advance, is placed thereon. The silver paste is then cured by heating to electrically connect them together. The driver IC 500 can be mounted by electrically connecting it to the signal transfer part 410 by flip-chip bonding with solder, then applying protective resin around the solder, and curing the resin.

The reservoir flow channel member 330 is bonded to the flow channel member 310. The bonding is performed using, for example, an adhesive. A well-known adhesive may be used. Preferably, an adhesive based on at least one thermosetting resin selected from the group consisting of epoxy resin, phenolic resin, and polyphenylene ether resin is preferably used.

A heat-insulating elastic member 450 is attached to a predetermined position of a frame 440 using resin or the like. A substrate 420, on which a connector 430 is mounted in advance, is placed between the reservoir flow channel member 330 and the frame 440 to which a rubber member as the heat-insulating elastic member 450 has been attached. Screws are used to join the frame 440 and the reservoir flow channel member 330 and to fix the substrate 420. The signal transfer part 410 is then bent and allowed to pass through a through hole 336 of the reservoir flow channel. One end of the signal transfer part 410 is then inserted into the connector 430 and fixed. Finally, a case 400 is engaged and fixed onto the frame 440 with screws. An inkjet recording head 200 is obtained by the process described above.

### 3. Inkjet textile printing ink

The inkjet textile printing ink (also referred to as simply the "textile printing ink" or "ink") for use in the present invention includes at least a dye, an adsorption inhibitor, a water-soluble organic solvent, and water.

### <Dye>

The dye contained in the inkjet textile printing ink for use in the present invention may be a reactive dye or a disperse dye.

### [Reactive dye]

The reactive dye for use in the present invention may be a vinylsulfone group-containing dye (a vinyl sulfone dye) or a dye having a monochloro-substituted 1,3,5-triazin-2-yl skeleton (a monochlorotriazine dye).

### [Vinyl sulfone reactive dye]

The vinyl sulfone reactive dye may be a compound having the structures of formulae (1) and (1') below in equilibrium with each other.

D-SO₂-CH₂CH₂-O-SO₃Na (1) ↔ D-SO₂CH=CH₂ + HO-SO₃Na (1'), wherein D represents the main part of the dye.

The vinyl sulfone reactive dye reacts with the recording medium. For example, the vinyl group of the vinyl sulfone reactive dye undergoes a nucleophilic addition reaction with the hydroxyl group of the recording medium so that the vinyl sulfone reactive dye is fixed to the recording medium. The vinyl sulfone reactive dye is characterized by having reactivity and coloring density higher than those of the monochlorotriazine reactive dye.

The vinyl sulfone reactive dye for use in the present invention may have a single vinylsulfone group or two or more vinylsulfone groups,

Examples of the vinyl sulfone reactive dye include
C. I. Reactive Yellow 13, 14, 17, 57, 174, or 184,
C. I. Reactive Orange 7, 16, 72, or 125,
C. I. Reactive Red 22, 22:1, 23, 49, 111, 180, 194, 195, 198, 222, 223, 227, 240, 241, or 261,
C. I. Reactive Violet 4 or 5,
C. I. Reactive Blue 6, 19, 21, 27, 36, 194, 221, 222, 225, 231, or 238,
C. I. Reactive Brown 9 or 31, and
C. I. Reactive Black 2, 5, or 31.

The content of the vinyl sulfone reactive dye in the ink is preferably, but not limited to, 3% by weight to less than 20% by weight based on the total weight of the ink. Particularly, when two or more textile printing inks of the same color are used, the content of the vinyl sulfone reactive dye in the textile printing ink with the highest dye concentration is preferably from 10% by weight to less than 20% by weight. If the content of the vinyl sulfone reactive dye is less than 3% by weight, the coloring density on the recording medium will be low. If the reactive dye content is 20% by weight or more, the ink will have increased viscosity, so that the ink's ability to be ejected will decrease.

### [Monochlorotriazine reactive dye]

The monochlorotriazine reactive dye reacts with fabrics. For example, the chloro group of the monochlorotriazine reactive dye undergoes a nucleophilic substitution reaction with the hydroxyl group of a fabric so that the monochlorotriazine reactive dye is fixed to the fabric.

The monochlorotriazine reactive dye may have a single monochlorotriazine group or two or more monochlorotriazine groups.

Examples of the monochlorotriazine reactive dye include
C. I. Reactive Yellow 13, 6, 12, 18, 95, or 99,
C. I. Reactive Orange 2, 5, 9, 12, 13, or 20,
C. I. Reactive Red 3, 4, 7, 15, 16, 24, 29, 31, 32, 33, 43, 45, 46, 58, 59, 218, 226, or 245,
C. I. Reactive Violet 1 or 2,
C. I. Reactive Blue 2, 3, 5, 7, 13, 14, 15, 25, 26, 39, 40, 41, 46, 49, or 176,
C. I. Reactive Green 5 or 8,
C. I. Reactive Brown 1, 2, 7, 8, 9, 11, or 14, and
C. I. Reactive Black 1, 3, 8, 10, 12, 13, or 39.

The content of the monochlorotriazine reactive dye in the ink is preferably, but not limited to, 3% by weight to 20% by weight based on the total weight of the ink. Particularly when two or more textile printing inks of the same color are used, the content of the monochlorotriazine reactive dye in the textile printing ink with the highest dye concentration is preferably from 10% by weight to less than 20% by weight. If the content of the monochlorotriazine reactive dye is less than 3% by weight, the coloring density on fabrics will be low. If the reactive dye content is more than 20% by weight, the ink will have increased viscosity so that the ink's ability to be ejected from the inkjet recording head will decrease.

### [Disperse dye]

The disperse dye may be a water-insoluble dye that is particularly suitable for the coloration of fabrics of hydrophobic synthetic fibers such as polyester fibers.

Examples of the disperse dye that may be used in the present invention include
C. I. Disperse Yellow 3, 4, 5, 7, 9, 13, 23, 24, 30, 33, 34, 42, 44, 49, 50, 51, 54, 56, 58, 60, 63, 64, 66, 68, 71, 74, 76, 79, 82, 83, 85, 86, 88, 90, 91, 93, 98, 99, 100, 104, 108, 114, 116, 118, 119, 122, 124, 126, 135, 140, 141, 149, 160, 162, 163, 164, 165, 179, 180, 182, 183, 184, 186, 192, 198, 199, 202, 204, 210, 211, 215, 216, 218, 224, 227, 231, or 232,
C. I. Disperse Orange 1, 3, 5, 7, 11, 13, 17, 20, 21, 25, 29, 30, 31, 32, 33, 37, 38, 42, 43, 44, 45, 46, 47, 48, 49, 50, 53, 54, 55, 56, 57, 58, 59, 61, 66, 71, 73, 76, 78, 80, 89, 90, 91, 93, 96, 97, 119, 127, 130, 139, or 142,
C. I. Disperse Red 1, 4, 5, 7, 11, 12, 13, 15, 17, 27, 43, 44, 50, 52, 53, 54, 55, 56, 58, 59, 60, 65, 72, 73, 74, 75, 76, 78, 81, 82, 86, 88, 90, 91, 92, 93, 96, 103, 105, 106, 107, 108, 110, 111, 113, 117, 118, 121, 122, 126, 127, 128, 131, 132, 134, 135, 137, 143, 145, 146, 151, 152, 153, 154, 157, 159, 164, 167, 169, 177, 179, 181, 183, 184, 185, 188, 189, 190, 191, 192, 200, 201, 202, 203, 205, 206, 207, 210, 221, 224, 225, 227, 229, 239, 240, 257, 258, 277, 278, 279, 281, 288, 298, 302, 303, 310, 311, 312, 320, 324, or 328,
C. I. Disperse Violet 1, 4, 8, 23, 26, 27, 28, 31, 33, 35, 36, 38, 40, 43, 46, 48, 50, 51, 52, 56, 57, 59, 61, 63, 69, or 77,
C. I. Disperse Green 9
C. I. Disperse Brown 1, 2, 4, 9, 13, or 19,
C. I. Disperse Blue 3, 7, 9, 14, 16, 19, 20, 26, 27, 35, 43, 44, 54, 55, 56, 58, 60, 62, 64, 71, 72, 73, 75, 79, 81, 82, 83, 87, 91, 93, 94, 95, 96, 102, 106, 108, 112, 113, 115, 118, 120, 122, 125, 128, 130, 139, 141, 142, 143, 146, 148, 149, 153, 154, 158, 165, 167, 171, 173, 174, 176, 181, 183, 185, 186, 187, 189, 197, 198, 200, 201, 205, 207, 211, 214, 224, 225, 257, 259, 267, 268, 270, 284, 285, 287, 288, 291, 293, 295, 297, 301, 315, 330, or 333, and
C. I. Disperse Black 1, 3, 10, or 24.

The content of the disperse dye in the inkjet textile printing ink for use in the present invention is preferably from 0.1 to 20% by weight, more preferably from 0.2 to 13% by weight. A commercially available disperse dye may be used as it is. Preferably, a commercially available disperse dye is subjected to a purification treatment before use. The purification may be performed using a known recrystallization method, cleaning, or the like. Preferably, the organic solvent to be used in the purification method and the purification treatment is appropriately selected depending on the type of the dye.

When the inkjet textile printing ink for use in the present invention contains the disperse dye, the ink preferably further contains a dispersing agent. The dispersing agent, which may be used for the disperse dye in the present invention, may be a polymer dispersing agent, a low-molecular-weight surfactant, or the like. A polymer dispersing agent is preferably used in view of the storage stability of the ink.

Examples of the polymer dispersing agent include natural rubbers such as gum arabic and tragacanth gum, glucosides such as saponin, cellulose derivatives such as methyl cellulose, carboxy cellulose, and hydroxymethyl cellulose, natural polymers such as lignosulfonates and shellac, anionic polymers such as polyacrylates, salts of styrene-acrylic acid copolymers, salts of vinylnaphthalene-maleic acid copolymers, sodium salts or phosphates of β-naphthalenesulfonic acid-formaldehyde condensates, and nonionic polymers such as polyvinyl alcohol, polyvinylpyrrolidone, and polyethylene glycol.

Examples of the low-molecular-weight surfactant include anionic surfactants such as fatty acid salts, fatty alcohol sulfates, liquid fatty acid sulfates, and alkyl allyl sulfonates, and nonionic surfactants such as polyoxyethylene alkyl ethers, sorbitan alkyl esters, and polyoxyethylene sorbitan alkyl esters. One or more of these compounds may be appropriately selected and used. The content of the surfactant in the ink is preferably in the range of 1 to 20% by weight based on the total weight of the ink.

In the present invention, the dispersing agent such as the polymer dispersing agent is preferably used in an amount of 20 to 200% by weight based on the weight of the disperse dye. If the amount of the dispersing agent is too low, the disperse dye will have insufficient ability to form fine particles or have insufficient dispersion stability. On the other hand, if the amount of the dispersing agent is too large, the ability to form fine particles or dispersion stability will decrease, and the ink will have increased viscosity, which is not preferred. These dispersing agents may be used alone or in any combination.

### <Adsorption inhibitor>

The adsorption inhibitor contained in the textile printing ink for use in the present invention is an acid with a pKa value of 5.5 to 7.5. As mentioned above, as the content of a water-soluble organic solvent in a textile printing ink increases, the dye tends to decrease in solubility and to precipitate. When the flow channel member of the inkjet recording head is made of metal such as stainless steel, the dye precipitate can adsorb to the discharge hole (nozzle) so that the ink discharge performance can decrease. As a measure against this problem, the textile printing ink for use in the present invention contains an acid with a pKa value of 5.5 to 7.5 as an agent for inhibiting the adsorption of the dye, so that the adsorption of the dye precipitate can be prevented. When the pKa value is 5.5 or more, the decomposition of the dye will be prevented, and the ink will have high storage stability.

Examples of the acid with a pKa value of 5.5 to 7.5 include inorganic acids such as phosphoric acid and aliphatic polycarboxylic acids such as maleic acid and citric acid. Among them, hydroxy acids are preferred, and citric acid is particularly preferred.

The content of the acid with a pKa value of 5.5 to 7.5 in the ink is preferably from 0.5 to 8% by weight based on the total weight of the ink. If the acid content is less than 0.5% by weight, the adsorption of the dye precipitate to the nozzle may fail to be sufficiently prevented, or the storage stability of the ink may decrease. If the acid content is more than 8% by weight, the adsorption inhibitor itself may precipitate to cause a problem such as clogging of the nozzle.

The pKa value is also called the acid dissociation constant, which can be determined by a conventional method. The pKa value can be determined by, for example, the method described in Jikken Kagaku Koza 5, Netsuteki Sokutei oyobi Heiko (Experimental Chemistry Lecture 5, Thermal Measurements and Equilibrium), page 460, edited by The Chemical Society of Japan, Maruzen Co., Ltd.

### <Water-soluble organic solvent>

The textile printing ink for use in the present invention contains 25% by weight to less than 70% by weight of a water-soluble organic solvent based on the total weight of the ink. The use of the adsorption inhibitor makes it possible to set the lower limit of the water-soluble organic solvent content at 25% by weight. The lower limit of the water-soluble organic solvent content may be changed depending on the type of the ink set described below. For example, when an image is formed using a set of inks of seven colors including yellow (Y), orange (Or), blue (B), pink (Pk), magenta (M), sky blue (Sky), and gray (G) inks, each ink may form a textile printing ink containing 30% by weight to less than 70% by weight of the water-soluble organic solvent based on the total weight of the ink. For example, when an image is formed using a set of inks of five colors including orange (Or), pink (Pk), magenta (M), sky blue (Sky), and gray (G) inks, each ink may form a textile printing ink containing 35% by weight to less than 70% by weight of the water-soluble organic solvent based on the total weight of the ink. Alternatively, when an image is formed using a set of light color inks (e.g., pink (Pk), sky blue (Sky), and gray (G) inks), each ink may form a textile printing ink containing 40% by weight to less than 70% by weight of the water-soluble organic solvent based on the total weight of the ink.

Examples of the water-soluble organic solvent in the textile printing ink for use in the present invention include, but are not limited to, alcohols (e.g., methanol, ethanol, propanol, isopropanol, butanol, isobutanol, sec-butanol, and tert-butanol); polyalcohols (e.g., ethylene glycol, diethylene glycol, triethylene glycol, polyethylene glycol, propylene glycol, dipropylene glycol, polypropylene glycol, butylene glycol, hexanediol, pentanediol, glycerin, hexanetriol, and thiodiglycol); amines (e.g., ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethylene imine, pentamethyldiethylenetriamine, and tetramethylpropylenediamine); amides (e.g., formamide, N,N-dimethylformamide, and N,N-dimethylacetamide); heterocycles (e.g., 2-pyrrolidone, N-methyl-2-pyrrolidone, cyclohexylpyrrolidone, 2-oxazolidone, and 1,3-dimethyl-2-imidazolidinone); and sulfoxides (e.g., dimethylsulfoxide).

### <Buffer>

A buffer is a solution having such properties that its pH does not significantly change upon external addition of acid or base (buffer action). A solution containing a buffer resists changes in pH even when a certain amount of acid or base is added to the solution or when the concentration of the solution is changed by the evaporation or dilution of the solution. As mentioned above, the textile printing ink for use in the present invention contains an acid with a pKa value of 5.5 to 7.5 as the adsorption inhibitor, among acids that can be used as buffers. In other words, the adsorption inhibitor in the textile printing ink for use in the present invention can also function as a buffer. Therefore, the textile printing ink for use in the present invention does not necessarily contain a buffer. However, for example, to prevent pH from fluctuating around a specific pH (to increase the buffer capacity), an acid with a pKa value out of the range of 5.5 to 7.5 or a salt thereof may be further added as a buffer. Examples of such a buffer include acetic acid, oxalic acid, boric acid, phthalic acid, and sodium, potassium, and ammonium salts thereof.

When such a buffer is added, the buffer content is preferably from 0.1 to 2.0% by weight based on the total weight of the ink. If the buffer content is less than 0.1% by weight, the pH of the textile printing ink may be difficult to keep constant. If the buffer content is more than 2.0% by weight, the ink may have increased viscosity, cause clogging of the inkjet recording head nozzle, and have lower ability to be ejected.

The pH of the textile printing ink can be freely determined to some extent depending on the combination of the materials added or the contents of the materials. For example, when the vinyl sulfone reactive dye is used for the textile printing ink in the present invention, the textile printing ink preferably has a pH of 2.5 to 5.5 in view of the storage stability of the ink. When the monochlorotriazine reactive dye is used for the textile printing ink in the present invention, the textile printing ink preferably has a pH of 7 to 9 in view of the storage stability of the ink.

### <Surfactant>

The textile printing ink for use in the present invention preferably further contains a surfactant. Examples of the surfactant that may be used in the present invention include, but are not limited to, dialkylsulfosuccinates, alkylnaphthalenesulfonates, polyoxyethylene alkyl ethers, polyoxyethylene alkyl ally ethers, acetylene glycols, polyoxyethylene-polyoxypropylene block copolymers, alkylamines, quaternary ammonium salts, silicone surfactants, or fluoro-surfactants. Among them, anionic or nonionic surfactants are preferred, and among nonionic surfactants, acetylene glycol surfactants are preferred in view of ejection stability because they are less foaming and allow the control of surface tension. Examples of commercially available nonionic surfactants include Olfine E1010 (manufactured by Nissin Chemical Industry Co., Ltd.) and the like.

The content of the surfactant in the ink is preferably so adjusted that the ink can have a surface tension of 30 to 60 mN/m. Specifically, the content of the surfactant in the ink is preferably from 0.0001 to 5% by weight based on the total weight of the ink.

Surface tension measurement methods are described in general texts on surface chemistry or colloid chemistry. For example, a reference can be made to Shin Jikken Kagaku Koza 18, Kaimen to Colloid (New Experimental Chemistry Lecture 18, Interface and Colloid), pp. 68-117, edited by The Chemical Society of Japan, published by Maruzen Co., Ltd. More specifically, the surface tension can be determined by ring method (du Nouy method) or vertical plate method (Wilhelmy method). The surface tension of the textile printing ink for use in the present invention can be measured with Surface Tensiometer CBVP-A3 (Kyowa Interface Science Co., Ltd.).

### <Humectant>

The textile printing ink for use in the present invention preferably contains a humectant, which can suppress the evaporation of water in the ink.

Examples of the humectant include urea, alkylene urea, polyalcohols (e.g., ethylene glycol, diethylene glycol, triethylene glycol, tetraethylene glycol, 1,2-propylene glycol, dipropylene glycol, and glycerin), N-methyl-2-pyrrolidone, and the like. Among them, urea or alkylene urea is preferred, and alkylene urea is more preferred. When urea is used as the humectant, urea can be decomposed to release ammonia and carbon dioxide gases during storage over time. If the gases are absorbed by the ink, the ink's ability to be ejected will tend to decrease.

Examples of alkylene urea include methylene urea, ethylene urea, 1,3-propylene urea, hydantoin, 1,3-tetramethyleneurea, and the like. Among them, ethylene urea is preferred.

The content of the humectant in the ink is preferably from 0.1 to 10% by weight based on the total weight of the ink. When the content of the humectant falls within the range, the nozzle surface of the inkjet recording head can be prevented from drying, and a reduction in the ink's ability to be ejected can also be suppressed.

### <Other additives>

The textile printing ink for use in the present invention may contain an antiseptic or antifungal agent for keeping the long-term storage stability of the ink. Examples of the antiseptic and antifungal agents include, but are not limited to, aromatic halogen compounds (e.g., Preventol CMK), methylene dithiocyanate, halogen-containing nitrogen sulfur compounds, 1,2-benzisothiazolin-3-one (e.g., PROXEL GXL), and the like.

### 4. Method for producing inkjet textile printing ink

The reactive dye-containing inkjet textile printing ink for use in the present invention can be produced through the step of mixing the reactive dye, the adsorption inhibitor, the water-soluble organic solvent, water, and optionally other components. The disperse dye-containing inkjet textile printing ink for use in the present invention can be prepared by mixing the disperse dye, the adsorption inhibitor, the dispersing agent, the water-soluble organic solvent, water, and optionally other components and dispersing them with a dispersing machine. The dispersing machine may be a conventionally known ball mill, sand mill, line mill, high-pressure homogenizer, or the like.

### 5. Ink set

As mentioned above, the inkjet textile printing ink for use in the present invention is, for example, a yellow ink (Y), an orange ink (Or), a blue ink (B), a pink ink (Pk), a magenta ink (M), a cyan ink (C), a sky blue ink (Sky), a black ink (Bk), a gray ink (G), or the like. Two or more inks of different colors may be combined to form an ink set. The ink set for use in the image forming method of the present invention includes a plurality of inks of different colors, in which at least one of the inks is the inkjet textile printing ink described above for use in the present invention.

### Examples

Hereinafter, the present invention will be more specifically described with reference to examples. It should be noted that such examples should not be construed as limiting of the scope of the present invention.

### <Preparation of inkjet recording head>

An inkjet recording head was prepared according to the procedure described above. The number of nozzles was 166 per row, and 644 nozzles in total (four rows) were arranged in the flow channel member 310. The nozzles were arranged at a pitch of 150 dpi in the same row. Adjacent rows were shifted by 1/2 pitches from one another, so that 600 dpi was obtained in total. The flow channel member was made of SUS 316 stainless steel. Each discharge hole was so tapered that its opening on the ink discharge port side was smaller than its opening on the ink pressurizing chamber side.

### <Ink materials>

### (Reactive dyes)

C. I. Reactive Red 24 (monochlorotriazine dye)
C. I. Reactive Red 218 (monochlorotriazine dye)
C. I. Reactive Blue 176 (monochlorot riazine dye)
C. I. Reactive Blue 15 (monochlorotriazine dye)
C. I. Reactive Blue 49 (monochlorotriazine dye)
C. I. Reactive Brown 11 (monochlorotriazine dye)
C. I. Reactive Orange 12 (monochlorotriazine dye)
C. I. Reactive Orange 13 (monochlorotriazine dye)
C. I. Reactive Yellow 95 (monochlorotriazine dye)

### (Water-soluble organic solvent)

Ethylene glycol (manufactured by KANTO CHEMICAL CO., INC.)
Propylene glycol (manufactured by KANTO CHEMICAL CO., INC.)
Glycerin (manufactured by KANTO CHEMICAL CO., INC.)
(Adsorption inhibitor)
3 Na citrate dihydrate (manufactured by KANTO CHEMICAL CO., INC.)
Maleic acid (manufactured by KANTO CHEMICAL CO., INC.)
Phosphoric acid (manufactured by KANTO CHEMICAL CO., INC.)
(Humectant)
Ethylene urea (30% aqueous solution)
(Surfactant)
Olfine E1010 (manufactured by Nissin Chemical Industry Co., Ltd.
(Antiseptic)
PROXEL GXL (manufactured by Arch Chemicals, Inc.)
(Water)
Ion-exchanged water

### <Preparation of inkjet textile printing ink>

Each set of constituent materials shown in Tables 1 and 2 were mixed and stirred to form a solution. The solution was filtered through a 0.8 µm filter and then subjected to deaeration, so that each of inkjet textile printing inks of Examples 1 to 12 and Comparative Examples 1 to 11 was obtained. Note that in Tables 1 and 2, the content of each constituent material is expressed as the weight ratio.

### <Evaluation of ink storage stability>

Each ink was allowed to stand for up to 24 months in a thermostatic chamber set at 25°C, and then measured for absorbance. The measured absorbance at the maximum peak wavelength was converted to a value relative to the value measured immediately after the preparation, which was normalized to 100%, when evaluation was performed. The evaluation criteria are as follows.
⊙ : The change in absorbance is within ±5% after 24 months.
○: The change in absorbance is within ±5% after 12 months and ±5% or more after 24 months.
Δ: The change in absorbance is within ±5% after six months and ±5% or more after 12 months.
×: The change in absorbance is more than ±5% after three months.

### <Evaluation of discharge stability>

The prepared inkjet recording head was filled with each ink, and for the initial evaluation, it was checked that the ink was discharged from all the nozzles. Thereafter, standing for one week and printing (printing at intervals of one week) were performed over six months when the discharge stability was evaluated. The evaluation criteria are as follows.
⊙: No displacements of ink dots or no discharge failure is observed after six months.
○: Discharge failure is not observed at all after six months. Displacements of ink dots occur slightly, but normal discharge conditions are easily recovered by head cleaning.
Δ: After six months, discharge failure and deflection occur slightly, and normal discharge conditions are not recovered by head cleaning.
×: After six months, discharge failure and deflection occur frequently, and normal discharge conditions are not recovered by head cleaning.

**[Table 1]**

| Examples | | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|
| Ink type | | | Pink ink a-1 | Gray ink a-1 | Sky blue ink a-1 | Magenta ink a-1 | Orange ink a-1 | Yellow ink a-1 | Blue ink a-1 | Cyan ink a-1 | Black ink a-1 | Pink ink a-2 | Black ink a-2 | Pink ink a-3 |
| Reactive dye | Pk dye | C.I. Reactive Red 24 | 9.0 | | | | | | | | | 9.0 | | 9.0 |
| | Sky dye | C.I. Reactive Blue 176 | | 1.7 | | | | | | | 8.9 | | 8.9 | |
| | Bk dye | C.I. Reactive Brown 11 | | 1.1 | | | | | | | 5.7 | | 5.7 | |
| | C dye | C.I. Reactive Blue 15 | | | 4.2 | | | | | 17.1 | | | | |
| | M dye | C.I. Reactive Red 218 | | | | 10.8 | | | | | | | | |
| | Or dye | C.I. Reactive Orange 13 | | | | | 47.8 | | | | | | | |
| | Y dye | C.I. Reactive Yellow 95 | | | | | | 47.0 | | | | | | |
| | B dye | C.I. Reactive Blue 49 | | | | | | | 46.0 | | | | | |
| | G dye | C.I. Reactive Range 12 | | 0.3 | | | | | | | 1.5 | | 1.5 | |
| Water-soluble organic solvent | Glycerin | | 5.0 | 5.3 | 5.2 | 5.5 | 5.0 | 5.0 | 5.5 | 4.5 | 6.0 | 5.0 | 6.0 | 5.0 |
| | Ethylene glycol | | 24.0 | 23.8 | 23.8 | 24.0 | 24.0 | 24.0 | 24.0 | 23.0 | 22.7 | 24.0 | 22.7 | 24.0 |
| | Propylene glycol | | 19.0 | 18.1 | 17.1 | 8.2 | 6.6 | 4.1 | 2.5 | | | 19.0 | | 19.0 |
| Humectant | Ethylene urea (30% aqueous solution) | | | | 1.1 | | | | | 4.8 | | | | |
| Antiseptic | PROXEL GXL (S) | | 0.1 | 0.1 | 0.1 | 0.1 | | | | 0.1 | 0.1 | 0.1 | 0.1 | 0.1 |
| Adsorption inhibitor | 3 Na citrate dihydrate (10% aqueous solution) | | 1.0 | 1.0 | 1.2 | 5.2 | 5.2 | 5.2 | 5.2 | 5.2 | 5.2 | | | |
| | Maleic acid | | | | | | | | | | | 1.0 | 5.2 | |
| | Phosphoric acid | | | | | | | | | | | | | 1.0 |
| Surfactant | Olfine E1010 | | 0.1 | 0.1 | 0.1 | 0.1 | 0.1 | 0.1 | 0.1 | 0.1 | 0.1 | 0.1 | 0.1 | 0.1 |
| Ion-exchanged water | | | Balance | Balance | Balance | Balance | Balance | Balance | Balance | Balance | Balance | Balance | Balance | Balance |
| Glycol content | | | 43.0 | 41.8 | 40.9 | 32.2 | 30.6 | 28.1 | 26.5 | 23.0 | 22.7 | 43.0 | 22.7 | 43.0 |
| Absorption inhibitor's pKa | | | 6.4 | 6.4 | 6.4 | 6.4 | 6.4 | 6.4 | 6.4 | 6.4 | 6.4 | 5.8 | 5.8 | 7.2 |
| Discharge stability | | | ○ | ○ | ○ | ○ | ○ | ⊙ | ⊙ | ⊙ | ⊙ | ○ | ⊙ | ○ |
| Storage stability | | | ⊙ | ⊙ | ⊙ | ⊙ | ⊙ | ⊙ | ⊙ | ⊙ | ⊙ | ○ | ○ | ○ |

**[Table 2]**

| Comparative Examples | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 |
|---|---|---|---|---|---|---|---|---|---|---|---|---|---|
| Ink type | | | Pink ink b-1 | Gray ink b-1 | Sky blue ink b-1 | Magenta ink b-1 | Orange ink b-1 | Yellow ink b-1 | Blue ink b-1 | Cyan ink b-1 | Black ink b-1 | Pink ink b-2 | Black ink b-2 |
| | Pk dye | C.I. Reactive Red 24 | 9.0 | | | | | | | | | 9.0 | |
| | Sky dye | C.I. Reactive Blue 176 | | 1.7 | | | | | | | 8.9 | | 8.9 |
| | Bk dye | C.I. Reactive Brown 11 | | 1.1 | | | | | | | 5.7 | | 5.7 |
| | C dye | C.I. Reactive Blue 15 | | | 4.2 | | | | | 17.1 | | | |
| Reactive dye | M dye | C.I. Reactive Red 218 | | | | 10.8 | | | | | | | |
| | Or dye | C.I. Reactive Orange 13 | | | | | 47.8 | | | | | | |
| | Y dye | C.I. Reactive Yellow 95 | | | | | | 47.0 | | | | | |
| | B dye | C.I. Reactive Blue 49 | | | | | | | 46.0 | | | | |
| | G dye | C.I. Reactive Orange 12 | | 0.3 | | | | | | | 1.5 | | 1.5 |
| Water-soluble organic solvent | Glycerin | | 5.0 | 5.3 | 5.2 | 5.5 | 5.0 | 5.0 | 5.5 | 4.5 | 6.0 | 5.0 | 6.0 |
| | Ethylene glycol | | 24.0 | 23.8 | 23.8 | 24.0 | 24.0 | 24.0 | 24.0 | 23.0 | 22.7 | 24.0 | 22.7 |
| | Propylene glycol | | 19.0 | 18.1 | 17.1 | 8.2 | 6.6 | 4.1 | 2.5 | | | 19.0 | |
| Humectant | Ethylene urea (30% aqueous solution) | | | | 1.1 | | | | | 4.8 | | | |
| Antiseptic | PROXEL GXL (S) | | 0.1 | 0.1 | 0.1 | 0.1 | | | | 0.1 | 0.1 | 0.1 | 0.1 |
| Adsorption inhibitor | Malic acid | | | | | | | | | | | 1.0 | 5.2 |
| Surfactant | Olfine E1010 | | | | | | | | | | | | |
| Ion-exchanged water | | | Balance | Balance | Balance | Balance | Balance | Balance | Balance | Balance | Balance | Balance | Balance |
| Glycol content | | | 43.0 | 41.8 | 40.9 | 32.2 | 30.6 | 28.1 | 26.5 | 23.0 | 22.7 | 43.0 | 22.7 |
| Adsorption inhibitor's pKa | | | | | | | | | | | | 5.1 | 5.1 |
| Discharge stability | | | × | × | × | × | × | Δ | Δ | A | Δ | × | Δ |
| Storage stability | | | × | × | × | × | × | × | × | × | × | Δ | Δ |

The inks of Examples 1 to 12 each contain an adsorption inhibitor with a pKa value in the range of 5.5 to 7.5. The inks of Examples 1 to 12 are stably discharged and have good storage stability even when used in image formation with an inkjet recording head including a metal flow channel member having tapered ink discharge holes. In particular, the inks of Examples 1 to 9 produced with citric acid as the adsorption inhibitor have particularly high storage stability.

In contrast, the inks of Comparative Examples 1 to 9 with no adsorption inhibitor have poor discharge stability. This would be because in the absence of the adsorption inhibitor, the dye can precipitate and adhere to the metal nozzle plate. In addition, the inks of Comparative Examples 1 to 9 have poor storage stability. This would be because in the absence of the adsorption inhibitor, the dye can be decomposed.

It is also apparent that the inks of Comparative Examples 10 and 11 have poor discharge stability and poor storage stability. This would be because malic acid used as the adsorption inhibitor has a pKa value of less than 5.5 so that it cannot prevent the adhesion of the dye and the dye can be decomposed.

According to the present invention, the ink containing an adsorption inhibitor with a specified pKa value has improved storage stability, and the image formation with the ink can be performed with reduced discharge defects such as displacements of ink dots and discharge failure even using an inkjet recording head including a metal flow channel member having tapered ink discharge holes, which makes it possible to provide an image forming method in which the ink can be stably ejected for a long period of time.

Although the present invention has been described and illustrated in detail, it is clearly understood that the same is by way of illustrated and example only and is not to be taken by way of limitation, the scope of the present invention being interpreted by terms of the appended claims.

## Claims

1. An image forming method comprising discharging an inkjet textile printing ink from a plurality of ink discharge holes (317) provided in an inkjet recording head (200),
the inkjet recording head (200) comprises tapered ink discharge holes (317), ink pressurizing chambers (314), and a metal flow channel member (310) configured to connect the ink discharge holes (317) to the ink pressurizing chambers (314), **characterised in that** the inkjet textile printing ink comprises a dye, an adsorption inhibitor, a water-soluble organic solvent, and water,
the inkjet textile printing ink contains 25% by weight to less than 70% by weight of the water-soluble organic solvent based on the total weight of the ink, and
the adsorption inhibitor is an acid with a pKa of 5.5 to 7.5.

2. The image forming method according to claim 1, **characterized in that** the flow channel member (310) comprises stainless steel.

3. The image forming method according to claim 1 or 2, **characterized in that** the adsorption inhibitor is an aliphatic polycarboxylic acid.

4. The image forming method according to claim 3, **characterized in that** the aliphatic polycarboxylic acid is a hydroxy acid.

5. The image forming method according to claim 4, **characterized in that** the hydroxy acid is citric acid.

6. The image forming method according to any one of claims 1 to 5, **characterized in that** a set of a yellow inkjet textile printing ink, a magenta inkjet textile printing ink, and a blue inkjet textile printing ink is used, and
the yellow, magenta, and blue inks each contain 30% by weight to less than 70% by weight of the water-soluble organic solvent.

7. The image forming method according to any one of claims 1 to 6, **characterized in that** the dye is a reactive dye.

8. The image forming method according to any one of claims 1 to 6, **characterized in that** the dye is a disperse dye.

## Patentansprüche

1. Verfahren zur Bilderzeugung, welches das Ausstoßen einer Textildrucktintenstrahltinte aus einer Vielzahl von Tintenausstoßöffnungen (317), die in einem Tintenstrahlaufzeichnungskopf (200) angebracht sind, umfasst, wobei
der Tintenstrahlaufzeichnungskopf (200) verjüngte Tintenausstoßöffnungen (317), Tintendruckkammern (314) und ein metallisches Strömungskanalelement (310), welche konfiguriert ist, um die Tintenausstoßöffnungen (317) mit den Tintendruckkammern (314) zu verbinden, umfasst, **dadurch gekennzeichnet,**
**dass**
die Textildrucktintenstrahltinte einen Farbstoff, einen Adsorptionsinhibitor, ein wasserlösliches organisches Lösemittel und Wasser umfasst,
die Textildrucktintenstrahltinte 25 Gew.-% bis zu weniger als 70 Gew.-% des wasserlöslichen organischen Lösemittels bezogen auf das Gesamtgewicht der Tinte enthält, und
der Adsorptionsinhibitor eine Säure mit einem pKa von 5,5 bis 7,5 aufweist.

2. Das Verfahren zur Bilderzeugung nach Anspruch 1, **dadurch gekennzeichnet, dass** das Strömungskanalelement (310) Edelstahl umfasst.

3. Das Verfahren zur Bilderzeugung nach Anspruch 1 oder 2, **dadurch gekennzeichnet, dass** der Adsorptionsinhibitor eine aliphatische Polycarbonsäure ist.

4. Das Verfahren zur Bilderzeugung nach Anspruch 3, **dadurch gekennzeichnet, dass** die aliphatische Polycarbonsäure eine Hydroxysäure ist.

5. Das Verfahren zur Bilderzeugung nach Anspruch 4, **dadurch gekennzeichnet, dass** die Hydroxysäure Zitronensäure ist.

6. Das Verfahren zur Bilderzeugung nach einem der Ansprüche 1 bis 5, **dadurch gekennzeichnet, dass** ein Set aus einer gelben Textildrucktintenstrahltinte, einer magentafarbenen Textildrucktintenstrahltinte und einer blauen Textildrucktintenstrahltinte verwendet wird, und
die gelbe, magentafarbene und blaue Tinte jeweils 30 Gew.-% bis zu weniger als 70 Gew.-% des wasserlöslichen organischen Lösemittels enthält.

7. Das Verfahren zur Bilderzeugung nach einem der Ansprüche 1 bis 6, **dadurch gekennzeichnet, dass** der Farbstoff ein Reaktivfarbstoff ist.

8. Das Verfahren zur Bilderzeugung nach einem der Ansprüche 1 bis 6, **dadurch gekennzeichnet, dass** der Farbstoff ein Dispersionsfarbstoff ist.

## Revendications

1. Procédé de formation d'image comprenant la décharge d'une encre pour impression textile à jet d'encre à partir d'une pluralité de trous de décharge d'encre (317) prévus dans une tête d'enregistrement à jet d'encre (200),
la tête d'enregistrement à jet d'encre (200) comprend des trous de décharge d'encre coniques (317), des chambres de mise sous pression d'encre (314), et un élément de canal d'écoulement métallique (310) configuré pour relier les trous de décharge d'encre (317) aux chambres de mise sous pression d'encre (314), **caractérisé en ce que**
l'encre pour impression textile à jet d'encre comprend un colorant, un inhibiteur d'adsorption, un solvant organique hydrosoluble et de l'eau,
l'encre pour impression textile à jet d'encre contient entre 25% en poids et moins de 70% en poids du solvant organique hydrosoluble sur la base du poids total de l'encre, et
l'inhibiteur d'adsorption est un acide ayant un pKa compris entre 5,5 et 7,5.

2. Procédé de formation d'image selon la revendication 1, **caractérisé en ce que** l'élément de canal d'écoulement (310) comprend de l'acier inoxydable.

3. Procédé de formation d'image selon la revendication 1 ou 2, **caractérisé en ce que** l'inhibiteur d'adsorption est un acide polycarboxylique aliphatique.

4. Procédé de formation d'image selon la revendication 3, **caractérisé en ce que** l'acide polycarboxylique aliphatique est un hydroxyacide.

5. Procédé de formation d'image selon la revendication 4, **caractérisé en ce que** l'hydroxyacide est l'acide citrique.

6. Procédé de formation d'image selon l'une quelconque des revendications 1 à 5, **caractérisé en ce qu'**un ensemble d'une encre jaune pour impression textile à jet d'encre, une encre magenta pour impression textile à jet d'encre, et une encre bleue pour impression textile à jet d'encre est utilisé, et
les encres jaune, magenta et bleue contiennent chacune entre 30% en poids et moins de 70% en poids du solvant organique hydrosoluble.

7. Procédé de formation d'image selon l'une quelconque des revendications 1 à 6, **caractérisé en ce que** le colorant est un colorant réactif.

8. Procédé de formation d'image selon l'une quelconque des revendications 1 à 6, **caractérisé en ce que** le colorant est un colorant dispersé.
